# EUROPÄISCHE PATENTSCHRIFT

(11) **EP 2 744 613 B1**
(45) Veröffentlichungstag und Bekanntmachung des Hinweises auf die Patenterteilung: **03.05.2017**
(21) Anmeldenummer: 12810031.0
(22) Anmeldetag: 11.10.2012
(51) Int. Cl.: B22F 3/00, B22F 3/10

(54) **SINTERVORRICHTUNG**
SINTERING DEVICE
DISPOSITIF DE FRITTAGE

(30) Priorität: 25.01.2012 DE 102012100632
(43) Veröffentlichungstag der Anmeldung: 25.06.2014
(73) Patentinhaber: Amann Girrbach AG, 6842 Koblach (AT)
(72) Erfinder: NOACK, Falko, 6890 Lustenau (AT); REICHERT, Axel, 9443 Widnau (CH)
(74) Vertreter: Fechner, Thomas
(86) Internationale Anmeldenummer: PCT/AT2012/000256
(87) Internationale Veröffentlichungsnummer: WO 2013/110098

(56) Entgegenhaltungen:
- EP-A1- 2 246 074
- EP-A2- 0 524 438
- DE-U1-202011 005 465
- DE-U1-202011 106 734
- JP-A- 2002 372 373
- N.N. ET AL: "VITA In-Ceram YZ Stand 05.10 Verarbeitungsanleitung Yttriumteilstabilisiertes Zirkoniumdioxid zur Hochtemperatur-Sinterung", , 1 May 2010 (2010-05-01), XP055278513, Retrieved from the Internet: URL:http://www.flemmer-dental.de/datenblae tter/zirkondioanleitung.pdf [retrieved on 2016-06-07]

## Beschreibung

Die vorliegende Erfindung betrifft eine Sintervorrichtung gemäß des Oberbegriffs des Patentanspruchs 1.

Sintervorrichtungen sind z. B. aus der WO 2011/020688 A1 bekannt. Sie bieten die Möglichkeit, z.B. metallische oder keramische Werkstücke, insbesondere für den Dentalbereich, in einer Schutzgasatmosphäre wie z. B. unter Verwendung von Argon zu sintern. Die Schutzgasatmosphäre dient der Verhinderung von Oxidationsprozessen am Werkstück während des Sintervorgangs. Durch die Schutzgasatmosphäre kann der Sintervorgang in einem oxidfreien bzw. zumindest oxidreduzierten Umfeld vonstatten gehen. Hierdurch werden Verfärbungen und Oxidationen des Werkstücks und damit aufwendige Nachbearbeitungen zu deren Entfernung vermieden.

Eine andere Sintervorrichtung ist in der EP 2 246 074 A1 gezeigt. Die EP 0 524 438 A2 zeigt eine gattungsgemäße Sintervorrichtung, bei der das zu sinternde Werkstück allerdings direkt auf dem Boden der Sinterkammer aufliegt.

Aufgabe der Erfindung ist es, eine gattungsgemäße Sintervorrichtungen dahingehend zu verbessern, dass eine möglichst hohe Konzentration an Schutzgas im Bereich des zu sinternden Werkstücks erreicht werden kann.

Zur Lösung dieser Aufgabe schlägt die Erfindung eine Sintervorrichtung gemäß Patentanspruch 1 vor.

Es ist somit vorgesehen, dass die Sintervorrichtung zumindest eine, im Sinterkammerhohlraum anordenbare Sintergutschale zur Aufnahme des zu sinternden Werkstücks aufweist und die Sintergutabdeckung schalenförmig ausgeformt ist, wobei die Sintergutabdeckung zum Abdecken des zu sinternden Werkstücks in der Sintergutschale mit dem Rand in der Sintergutschale, auf einem Boden der Sintergutschale aufstellbar ist und eine vom Rand abgewandte Hälfte der Sintergutabdeckung vollständig geschlossen ist.

Mit der erfindungsgemäßen Sintergutabdeckung wird eine Beruhigung der Gasströmungen und eine sehr hohe Konzentration des Schutzgases im Bereich des zu sinternden Werkstückes zu erreicht. Darüber hinaus wird durch diese Maßnahme auch der Verbrauch an Schutzgas sehr gering gehalten. Insgesamt hilft die Sintergutabdeckung somit, Oxidationen am Werkstück zu vermeiden und sorgt damit für eine Verbesserung der Oberflächenqualität des Werkstücks.

Die Sintergutabdeckung ist schalenförmig ausgeformt. Die Sintergutabdeckung kann aber muss nicht eine zylindrische Form haben. Auch andere Formen sind möglich. Die Sintergutabdeckung ist insbesondere für den Zeitraum des Sintervorgangs mit ihrem Rand auf dem Boden der Sintergutschale aufstellbar. Damit das Schutzgas in den von der Sintergutabdeckung umfassten Teilbereich des Sintergutschalenhohlraums, in dem sich das zu sinternde Werkstück tatsächlich befindet, gut eindringen kann, sehen bevorzugte Varianten der Erfindung vor, dass die Sintergutabdeckung und/oder die Sintergutschale zumindest eine Gasüberströmöffnung zum Gasaustausch in einem von der Sintergutabdeckung und der Sinterschale umschlossenen Sinterschalenhohlraum zur Aufnahme des Werkstücks aufweist bzw. aufweisen. Die Gasüberströmöffnung kann bzw. die Gasüberströmöffnungen können zwischen dem Rand der Sintergutabdeckung und dem Boden der Sintergutschale angeordnet sein. Es sind aber auch andere Ausgestaltungsformen möglich. Z.B. sind auch seitliche Löcher in der Sintergutabdeckung als Gasüberströmöffnung(en) möglich. Günstig ist es jedenfalls, wenn die Gasüberströmöffnung(en) nah am oben genannten Rand der Sintergutabdeckung angeordnet ist bzw. sind. In diesem Sinne ist es günstig, wenn die Gasüberströmöffnung(en) auf der dem genannten Rand zugewandten Seite bzw. Hälfte der Sintergutabdeckung angeordnet ist bzw. sind. Die vom genannten Rand abgewandte Seite bzw. Hälfte der Sintergutabdeckung ist vollständig geschlossen.

Um einen möglichst geringen Gasverbrauch und ein ideales Einströmverhalten des Schutzgases in die Sintergutschale weiter zu verbessern, sehen bevorzugte Ausgestaltungsformen der Erfindung vor, dass in einer Betriebsstellung, in der die Sinterschale im Sinterkammerhohlraum der Sinterkammer angeordnet ist, zwischen der Sinterschale und der Sinterkammer zumindest bereichsweise ein, vorzugsweise ringförmiger, Spalt mit einer Spaltweite kleiner oder gleich 1 mm angeordnet ist. Dieser Spalt ist günstigerweise zwischen entsprechenden Wänden der Sintergutschale und der Sinterkammer ausgebildet. Er wird zumindest im Betrieb bzw. betriebsbereiten Zustand der Sintervorrichtung realisiert. Um seine Funktion zu erfüllen, muss er nicht überall realisiert sein. Es reicht auch aus, wenn der Spalt mit der genannten Spaltbreite nur bereichsweise ausgebildet ist. Es sollte aber keine Umgehungswegsamkeiten für das Gas bzw. Gasgemisch geben, in denen das Schutzgas bzw. Restgas am Spalt vorbei in die Sintergutschale oder aus dieser heraus strömen kann.

Bevorzugte Varianten sehen vor, dass zumindest die Sinterkammer und die Sintergutschale aus zumindest einem Metall oder aus zumindest einer Metalllegierung bestehen. Metalle wie auch Metalllegierungen sind in der Regel gute thermische Leiter, sodass beim Sintervorgang die thermische Energie von außen leichter zum, im Sinterkammerhohlraum angeordneten, zu sinternden Werkstück bzw. Sintergut transportiert werden kann. Der Wärmeeintrag erfolgt gegenüber dem eingangs genannten Stand der Technik, bei dem Sinterkammer und Sintergutschale keramisch ausgeführt sind, deutlich schneller und effizienter. Außerdem wird eine besonders gute homogene Temperaturverteilung erreicht. Mit solchen Sintervorrichtungen können Aufheizgeschwindigkeiten größer 10 Kelvin/Minute realisiert werden. Genauso gut ist es möglich, hohe Abkühlgeschwindigkeiten umzusetzen, sodass die insgesamt benötigten Sinterzeiten drastisch verkürzt werden können. Ein weiterer Vorteil der metallischen Ausgestaltung liegt in der mechanischen Festigkeit und dem für das Handling günstigen plastischen Verhalten von metallischen bzw. auf Metalllegierungen basierenden entsprechenden Sintervorrichtungen. Das Risiko der ungewollten Zerstörung der Sintervorrichtungen durch mechanische Einflüsse wird stark reduziert. Darüber hinaus ist es mit solchen Sintervorrichtungen auch möglich, beim Sintervorgang höhere Temperaturen, also insbesondere Temperaturen über 1200°C zu realisieren, ohne dass dabei die Sintervorrichtung einen Schaden nimmt. So kann z. B. beim Sintern von CoCrMo (Cobalt-Chrom-Molybdän)-Legierungen mit Sintertemperaturen größer 1250°C eine sehr hohe Dichte des Endproduktes bzw. gesinterten Werkstücks erzielt werden. Die verbleibende Restporosität nimmt mit steigender Sintertemperatur deutlich ab, was der Enddichte und somit der mechanischen Festigkeit des fertig gesinterten Werkstückes zugutekommt. Hierdurch wird neben der Erhöhung der Effizienz in Form der Prozessgeschwindigkeit auch die Qualität des fertig gesinterten Werkstücks erhöht.

Die Sintergutabdeckung kann aus verschiedenen Materialien bestehen. So ist auch eine Ausführung der Sintergutabdeckung mit oder aus keramischem Material, wie z.B. Aluminiumoxid oder Zirkonoxid, möglich. Weiters können auch Sintergutabdeckungen mit oder aus Siliciumkarbid oder Quarzglas zum Einsatz kommen. Bevorzugt besteht die Sintergutabdeckung aber aus zumindest einem Metall oder zumindest einer Metalllegierung.

Grundsätzlich ist es günstig, wenn die verwendeten Metalle bzw. Metalllegierungen ein Sintern bei Temperaturen größer 1200° C (Celsius) ermöglichen. Weiter sollten Metalle bzw. Metalllegierungen ausgewählt werden, die möglichst hohe Aufheiz- und Abkühlgeschwindigkeiten, vorzugsweise größer 10° Kelvin/Minute, dauerhaft und reproduzierbar gewährleisten. Weiters ist es günstig, wenn alle Bauteile der Sintervorrichtung im Wesentlichen den gleichen Wärmeausdehnungskoeffizienten aufweisen. In diesem Sinne sehen bevorzugte Varianten der Erfindung vor, dass zumindest die Sinterkammer und die Sinterschale und die Sintergutabdeckung, vorzugs-weise die gesamte Sintervorrichtung, aus demselben Metall oder derselben Metall-legierung bestehen bzw. besteht.

Zur Ausbildung der genannten Bauteile der Sintervorrichtung kommen besonders bevorzugt Metalllegierungen mit Eisen, Chrom und/oder Aluminium zum Einsatz. Diese Metalllegierungen können ausschließlich aus entsprechenden Anteilen von Eisen, Chrom und/oder Aluminium bestehen. Es kann sich aber auch um Eisen-Chrom-Aluminium-Legierungen handeln, welche noch andere Bestandteile aufweisen. Natürlich können auch andere geeignete Metalle oder Metalllegierungen verwendet werden.

Mit erfindungsgemäßen Sintervorrichtungen können insbesondere metallische oder z.B. auch keramische Werkstücke gesintert werden.

Als Schutzgas kann wie beim Stand der Technik Argon verwendet werden. Natürlich können auch andere geeignete Gase bzw. Edelgase als Schutzgas zum Einsatz kommen. Zum Aufbau der Schutzgasatmosphäre im Sinterkammerhohlraum weist die Sinterkammer zumindest einen Gaseinlass zum Einleiten des die Schutzgasatmosphäre bildenden Gases bzw. Gasgemisches und zumindest einen Gasauslass für das Abströmen des verdrängten Restgases bzw. Schutzgases aus dem Sinterkammerhohlraum auf. Günstigerweise sind Gasauslass und Gaseinlass als getrennte Überströmöffnungen ausgebildet. Es sind aber auch integrierte Ausgestaltungsformen denkbar, bei denen z.B. ein Gaseinlass auch als Gasauslass verwendet wird.

Die den Sinterkammerhohlraum umschließende Sinterkammer ist günstigerweise zumindest zweiteilig oder auch mehr als zweiteilig ausgebildet. Zweiteilige Ausgestaltungsformen können z. B. aus einem Sinterkammerbasisteil und einem Sinterkammeroberteil bestehen. Zum Einbringen des zu sinternden Werkstücks wie auch zu dessen Entnahme können Sinterkammeroberteile und Sinterkammerbasisteile voneinander getrennt werden, wohingegen sie während des Sintervorgangs eine nach außen geschlossene Einheit in Form der Sinterkammer bilden. Generell, also auch unabhängig von der Frage, aus wieviel Teilen die Sinterkammer ausgebildet ist, sollte die Sinterkammer, abgesehen von Gaseinlass und/oder Gasauslass, eine zumindest im Betriebszustand nach außen geschlossene Einheit bilden. Durch die geschlossene Ausbildung kann eine ausreichende Gasdichtigkeit erreicht werden.

Neben der erfindungsgemäßen Sintervorrichtung betrifft die Erfindung auch ein Verfahren zum Sintern von, insbesondere dentalen, Werkstücken in einer Schutzgasatmosphäre mit einer Sintervorrichtung gemäß der Erfindung, wobei das zu sinternde Werkstück während des Sintervorgangs in der Sintergutschale der Sintervorrichtung und die Sintergutschale im Sinterkammerhohlraum der Sinterkammer angeordnet werden und das zu sinternde Werkstück mittels der Sintergutabdeckung abgedeckt wird. Durch die Abdeckung des zu sinternden Werkstücks in der Sintergutschale mittels der Sintergutabdeckung wird die bereits genannte Erhöhung der Schutzgaskonzentration in der unmittelbaren Umgebung des zu sinternden Werkstücks bei gleichzeitig geringem Schutzgasverbrauch erreicht.

Weitere Merkmale und Vorteile bevorzugter erfindungsgemäßer Ausgestaltungsformen werden anhand der in den Fig. gezeigten Variante einer Sintervorrichtung gemäß der Erfindung erläutert. Es zeigen:
- Fig. 1: die Sintervorrichtung in einer Explosionsdarstellung;
- Fig. 2: einen Vertikalschnitt durch die Sintervorrichtung in Betriebsstellung.

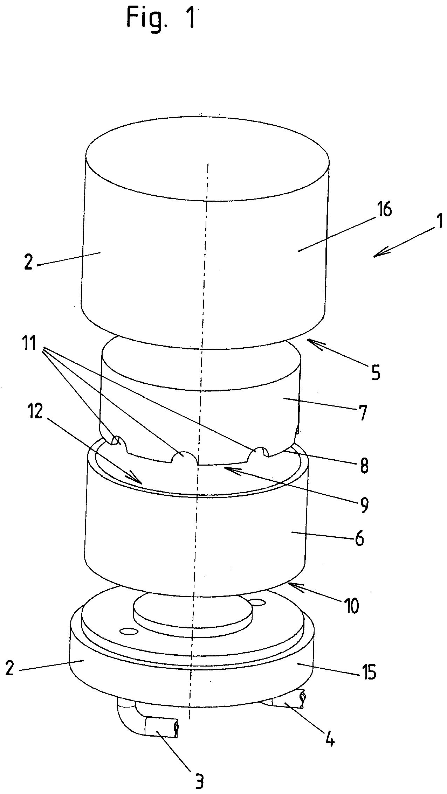

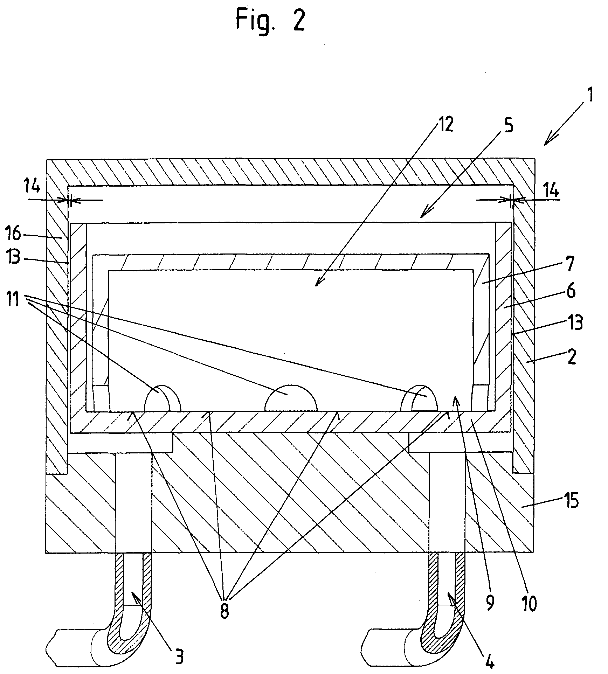

In der in Fig. 1 in einer Explosionsdarstellung dargestellten Variante der Erfindung ist die Sinterkammer 2 der Sintervorrichtung 1 zweiteilig ausgebildet. Sie weist ein Sinterkammerbasisteil 15 und ein Sinterkammeroberteil 16 auf. Das Sinterkammerbasisteil 15 und das Sinterkammeroberteil 16 können in der im Schnitt in Fig. 2 dargestellten Betriebsstellung so miteinander verbunden werden, dass insgesamt ein nach außen abgeschlossener, ausreichend gasdichter Aufbau erreicht wird. Durch den Gaseinlass 3 kann Schutzgas wie z. B. Argon in den von Sinterkammerbasisteil 15 und Sinterkammeroberteil 16 umschlossenen Sinterkammerhohlraum 5 der Sinterkammer 2 eindringen. Das verdrängte Restgas bzw. Schutzgas kann den Sinterkammerhohlraum 5 dann durch den Gasauslass 4 wieder verlassen. Wie bereits eingangs erläutert, können Gaseinlass 3 und Gasauslass 4, wie hier dargestellt, getrennt voneinander ausgebildet sein. Es kann sich um einzelne aber auch mehrere Gaseinlässe oder Gasauslässe handeln. Gasein- und -auslässe 3, 4 können gleiche aber auch verschiedene Öffnungsquerschnitte aufweisen. Sie erlauben jedenfalls ein Spülen des Sinterkammerhohlraums 5 und ein Verdrängen des dort vorhandenen Sauerstoffs, sodass der Sintervorgang in einer oxidfreien oder zumindest oxidreduzierten Schutzgasatmosphäre durchgeführt werden kann. Als Schutzgase kommen z. B. Argon aber auch andere geeignete Gase bzw. Edelgase in Frage.

In der Betriebsstellung gemäß Fig. 2 befindet sich im Sinterkammerhohlraum 5 die Sintergutschale 6, in die das hier nicht dargestellte, zu sinternde Werkstück während des Sintervorgangs eingelegt ist. Die Sintergutschale 6 hat den Vorteil, dass sich in ihr das in der Regel schwerere Schutzgas ansammeln kann, während der in der Regel leichtere Sauerstoff aus der Sintergutschale verdrängt wird. In der gezeigten Betriebsstellung steht die Sintergutschale 6 mit ihrem Boden 10 auf dem Sinterkammerbasisteil 15, ohne aber dabei die Wegsamkeiten vom Gaseinlass 3 zum Gasaus-lass 4 vollkommen zu versperren.

Die Wände der Sinterkammer 2, hier des Sinterkammeroberteils 16, und der Sintergutschale 6 sind günstigerweise so dimensioniert, dass zwischen ihnen zumindest bereichsweise ein Spalt 13 vorhanden ist, welcher eine Spaltweite 14 kleiner gleich 1 mm aufweist. Im gezeigten Ausführungsbeispiel ist dieser Spalt 13 ringförmig ausgeführt und umgibt die zylindermantelförmig ausgebildeten Seitenwände der Sintergutschale 6. Nach außen hin wird der Spalt 13 von zylindermantelförmigen Außenwänden der Sinterkammer 2 umgeben bzw. begrenzt.

Um die Konzentration an Schutzgas im Bereich des hier nicht dargestellten Werkstücks bzw. Sintergutes möglichst weit zu erhöhen, ist im gezeigten Ausführungsbeispiel während des Sintervorgangs, also in der in Fig. 2 gezeigten Stellung, erfindungsgemäß eine Sintergutabdeckung 7 im Sintergutschalenhohlraum 12 angeordnet. Das zu sinternde Werkstück, welches hier nicht dargestellt ist, befindet sich während des Sintervorgangs zwischen dem Boden 10 der Sintergutschale 6 und der Sintergutabdeckung 7. Die Sintergutabdeckung 7 ist in der gezeigten Betriebsstellung mit ihrem Rand 8, welcher die Öffnung 9 umgibt, auf dem Boden 10 der Sintergutschale 6 abgestellt. Durch die Gasüberströmöffnungen 11 kann Schutzgas in diesen Bereich eindringen und Restgas ausströmen.

Um die in dem gezeigten Ausführungsbeispiel dargestellte Sintervorrichtung 1 in Betrieb zu nehmen, wird die Sintergutschale 6 mit ihrem Boden 10 auf dem Sinterkammerbasisteil 15 abgestellt. Anschließend kann das zu sinternde Werkstück auf den Boden 10 abgelegt bzw. in den Sintergutschalenhohlraum 12 eingebracht werden. Danach wird über das zu sinternde Werkstück die Sintergutabdeckung 7 gestülpt, sodass der Rand 8 auf dem Boden 10 aufsteht. Anschließend wird die Sinterkammer 2 geschlossen, indem das Sinterkammeroberteil 16 auf das Sinterkammerbasisteil 15 aufgesetzt wird, womit sich die in Fig. 2 gezeigte betriebsbereite Stellung ergibt. Anschließend kann der gesamte Sinterkammerhohlraum 5 und damit insbesondere der Sintergutschalenhohlraum 12 mit Schutzgas gespült werden, bis sich die benötigte Schutzgasatmosphäre in der gewünschten Konzentration eingestellt hat. Hierzu wird das Schutzgas über den Gaseinlass 3 eingeleitet und das verdrängte Restgas bzw. Schutzgas über den Gasauslass 4 abgeleitet. Als Restgas werden die Gase bezeichnet, die nicht Schutzgas sind und während des Sintervorgangs verdrängt sein müssen. Während des gesamten Sintervorgangs wird mit Schutzgas gespült. Durch den Gasauslass strömen dann Restgase aber auch Schutzgas aus. Durch entsprechendes Heizen der Sintervorrichtung 1 von außen wird der Sintervorgang eingeleitet werden. Nach einem entsprechenden Abkühlen nach Ende des Sinterns kann der ganze Aufbau wieder in der umgekehrten Reihenfolge auseinandergebaut und das gesinterte Werkstück entnommen werden.

### Legende

### zu den Hinweisziffern:

- 1: Sintervorrichtung
- 2: Sinterkammer
- 3: Gaseinlass
- 4: Gasauslass
- 5: Sinterkammerhohlraum
- 6: Sintergutschale
- 7: Sintergutabdeckung
- 8: Rand
- 9: Öffnung
- 10: Boden
- 11: Gasüberströmöffnung
- 12: Sintergutschalenhohlraum
- 13: Spalt
- 14: Spaltweite
- 15: Sinterkammerbasisteil
- 16: Sinterkammeroberteil

## Patentansprüche

1. Sintervorrichtung (1) zum Sintern von, insbesondere dentalen, Werkstücken in einer Schutzgasatmosphäre, wobei die Sintervorrichtung (1) zumindest eine Sinterkammer (2) mit einem von der Sinterkammer (2) umschlossenen Sinterkammerhohlraum (5) und mit zumindest einem Gaseinlass (3) und zumindest einem Gausauslass (4) zum Gasaustausch in dem Sinterkammerhohlraum (5) aufweist, wobei die Sintervorrichtung (1) zusätzlich noch zumindest eine Sintergutabdeckung (7) zum Abdecken des zu sinternden Werkstücks aufweist, und die Sintergutabdeckung (7) eine von einem Rand (8) der Sintergutabdeckung (7) umfasste Öffnung (9) aufweist, **dadurch gekennzeichnet, dass** die Sintervorrichtung (1) zumindest eine, im Sinterkammerhohlraum (5) anordenbare Sintergutschale (6) zur Aufnahme des zu sinternden Werkstücks aufweist und die Sintergutabdeckung (7) schalenförmig ausgeformt ist, wobei die Sintergutabdeckung (7) zum Abdecken des zu sinternden Werkstücks in der Sintergutschale (6) mit dem Rand (8) in der Sintergutschale (6), auf einem Boden (10) der Sintergutschale (6) aufstellbar ist und eine vom Rand (8) abgewandte Hälfte der Sintergutabdeckung (7) vollständig geschlossen ist.

2. Sintervorrichtung (1) nach Anspruch 1, **dadurch gekennzeichnet, dass** die Sintergutabdeckung (7) und/oder die Sintergutschale (6), vorzugsweise zwischen dem Rand (8) der Sintergutabdeckung (7) und dem Boden (10) der Sintergutschale (6), zumindest eine Gasüberströmöffnung (11) zum Gasaustausch in einem von der Sintergutabdeckung (7) und der Sintergutschale (6) umschlossenen Sintergutschalenhohlraum (12) zur Aufnahme des zu sinternden Werkstücks aufweist bzw. aufweisen.

3. Sintervorrichtung (1) nach Anspruch 1 oder 2, **dadurch gekennzeichnet, dass** zumindest die Sinterkammer (2) und die Sintergutschale (6) aus zumindest einem Metall oder aus zumindest einer Metalllegierung bestehen.

4. Sintervorrichtung (1) nach einem der Ansprüche 1 bis 3, **dadurch gekennzeichnet, dass** die Sintergutabdeckung (7) aus zumindest einem Metall oder zumindest einer Metalllegierung besteht.

5. Sintervorrichtung (1) nach einem der Ansprüche 1 bis 4, **dadurch gekennzeichnet, dass** die gesamte Sintervorrichtung (1) aus zumindest einem Metall oder aus zumindest einer Metalllegierung besteht.

6. Sintervorrichtung (1) nach einem der Ansprüche 1 bis 5, **dadurch gekennzeichnet, dass** zumindest die Sinterkammer (2) und die Sintergutschale (6) und die Sintergutabdeckung (7), vorzugsweise die gesamte Sintervorrichtung (1), aus demselben Metall oder derselben Metalllegierung bestehen bzw. besteht.

7. Sintervorrichtung (1) nach einem der Ansprüche 3 bis 6, **dadurch gekennzeichnet, dass** die Metalllegierung zumindest als eine Legierungskomponente Eisen, Chrom und/oder Aluminium enthält.

8. Sintervorrichtung (1) nach einem der Ansprüche 1 bis 3, **dadurch gekennzeichnet, dass** die Sintergutabdeckung (7) keramisches Material, vorzugsweise Aluminiumoxid oder Zirkonoxid, oder Siliciumkarbid oder Quarzglas aufweist oder daraus besteht.

9. Sintervorrichtung (1) nach einem der Ansprüche 1 bis 8, **dadurch gekennzeichnet, dass** in einer Betriebsstellung, in der die Sintergutschale (6) im Sinterkammerhohlraum (5) der Sinterkammer (2) angeordnet ist, zwischen der Sintergutschale (6) und der Sinterkammer (2) zumindest bereichsweise ein, vorzugsweise ringförmiger, Spalt (13) mit einer Spaltweite (14) kleiner oder gleich 1 mm angeordnet ist.

10. Verfahren zum Sintern von, insbesondere dentalen, Werkstücken in einer Schutzgasatmosphäre mit einer Sintervorrichtung (1) nach einem der Ansprüche 1 bis 9, wobei das zu sinternde Werkstück während des Sintervorgangs in der Sintergutschale (6) der Sintervorrichtung (1) und die Sintergutschale (6) im Sinterkammerhohlraum (5) der Sinterkammer (1) angeordnet werden und das zu sinternde Werkstück mittels der Sintergutabdeckung (7) abgedeckt wird.

## Claims

1. A sintering device (1) for the sintering of workpieces, in particular dental, in a protective atmosphere, wherein the sintering device (1) has at least one sintering chamber (2) with a sintering chamber cavity (5) enclosed by the sintering chamber (2) and with at least one gas inlet (3) and at least one gas outlet (4) for gas exchange in the sintering chamber cavity (5), wherein the sintering device (1) additionally has at least one cover (7), for material to be sintered, to cover the workpiece to be sintered, and the cover (7) for material to be sintered has an opening (9) encircled by an edge (8) of the cover (7) for material to be sintered, **characterised in that** the sintering device (1) has at least one dish (6) for material to be sintered, arrangeable in the sintering chamber cavity (5), to receive the workpiece to be sintered and the cover (7) for material to be sintered is dish-shaped, wherein the cover (7), for material to be sintered, to cover the workpiece to be sintered located in the dish (6) for material to be sintered can be placed upright in the dish (6) for material to be sintered by means of the edge (8) on a base (10) of the dish (6) for material to be sintered and a half, remote from the edge (8), of the cover (7) for material to be sintered is completely closed.

2. A sintering device (1) according to claim 1, **characterised in that** the cover (7) for material to be sintered and/or the dish (6) for material to be sintered has/have, preferably between the edge (8) of the cover (7) for material to be sintered and the base (10) of the dish (6) for material to be sintered, at least one gas overflow opening (11) for gas exchange in a cavity (12) of the dish for material to be sintered for receiving the workpiece to be sintered, wherein the cavity (12) is surrounded by the cover (7) for material to be sintered and the dish (6) for material to be sintered.

3. A sintering device (1) according to claim 1 or 2, **characterised in that** at least the sintering chamber (2) and the dish (6) for material to be sintered are consisting of at least one metal or at least one metal alloy.

4. A sintering device (1) according to any one of claims 1 to 3, **characterised in that** the cover (7) for material to be sintered is consisting of at least one metal or at least one metal alloy.

5. A sintering device (1) according to any one of claims 1 to 4, **characterised in that** the entire sintering device (1) is consisting of at least one metal or at least one metal alloy.

6. A sintering device (1) according to any one of claims 1 to 5, **characterised in that** at least the sintering chamber (2) and the dish (6) for material to be sintered and the cover (7) for material to be sintered, preferably the entire sintering device (1), is/are consisting of the same metal or the same metal alloy.

7. A sintering device (1) according to any one of claims 3 to 6, **characterised in that** the metal alloy contains at least iron, chromium and/or aluminium as an alloying constituent.

8. A sintering device (1) according to any one of claims 1 to 3, **characterised in that** the cover (7) for material to be sintered has or is consisting of ceramic material, preferably aluminium oxide or zirconium oxide, or silicon carbide or quartz glass.

9. A sintering device (1) according to any one of claims 1 to 8, **characterised in that** in an operating position in which the dish (6) for material to be sintered is arranged in the sintering chamber cavity (5) of the sintering chamber (2), a, preferably annular, gap (13) with a gap width (14) smaller than or equal to 1 mm is arranged at least in certain regions between the dish (6) for material to be sintered and the sintering chamber (2).

10. A method of sintering workpieces, in particular dental, in a protective atmosphere with a sintering device (1) according to any one of claims 1 to 9, wherein the workpiece to be sintered is arranged in the dish (6) for material to be sintered of the sintering device (1) during the sintering procedure and the dish (6) for material to be sintered is arranged in the sintering chamber cavity (5) of the sintering chamber (1) and the workpiece to be sintered is covered by means of the cover (7) for material to be sintered.

## Revendications

1. Dispositif de frittage (1) servant à fritter des pièces, en particulier dentaires, sous une atmosphère protectrice, dans lequel le dispositif de frittage (1) présente au moins une chambre de frittage (2) avec une cavité de chambre de frittage (5) entourée par la chambre de frittage (2) et avec au moins une entrée de gaz (3) et au moins une sortie de gaz (4) aux fins de l'échange gazeux dans la cavité de chambre de frittage (5), dans lequel le dispositif de frittage (1) présente en supplément également au moins un recouvrement d'article à fritter (7) servant à recouvrir la pièce à fritter, et le recouvrement d'article à fritter (7) présente une ouverture (9) comprise par un bord (8) du recouvrement d'article à fritter (7), **caractérisé en ce que** le dispositif de frittage (1) présente au moins une coque d'article à fritter (6) pouvant être disposée dans la cavité de chambre de frittage (5), servant à recevoir la pièce à fritter, et le recouvrement d'article à fritter (7) est formé de manière à présenter une forme de coque, dans lequel le recouvrement d'article à fritter (7) servant à recouvrir la pièce à fritter dans la coque d'article à fritter (6) peut être placé à la verticale par le bord (8) de la coque d'article à fritter (6) sur un fond (10) de la coque d'article à fritter (6) et une moitié, opposée au bord (8), du recouvrement d'article à fritter (7) est entièrement fermée.

2. Dispositif de frittage (1) selon la revendication 1, **caractérisé en ce que** le recouvrement d'article à fritter (7) et/ou la coque d'article à fritter (6) présentent, de préférence entre le bord (8) du recouvrement d'article à fritter (7) et le fond (10) de la coque d'article à fritter (6), au moins une ouverture de trop-plein de gaz (11) servant à l'échange gazeux dans une cavité de coque d'article à fritter (12), entourée par le recouvrement d'article à fritter (7) et la coque d'article à fritter (6), servant à loger la pièce à fritter.

3. Dispositif de frittage (1) selon la revendication 1 ou 2, **caractérisé en ce qu'**au moins la chambre de frittage (2) et la coque d'article à fritter (6) sont constituées d'au moins un métal ou d'au moins un alliage de métaux.

4. Dispositif de frittage (1) selon l'une quelconque des revendications 1 à 3, **caractérisé en ce que** le recouvrement d'article à fritter (7) est constitué d'au moins un métal ou d'au moins un alliage de métaux.

5. Dispositif de frittage (1) selon l'une quelconque des revendications 1 à 4, **caractérisé en ce que** l'ensemble du dispositif de frittage (1) est constitué d'au moins un métal ou d'au moins un alliage de métaux.

6. Dispositif de frittage (1) selon l'une quelconque des revendications 1 à 5, **caractérisé en ce qu'**au moins la chambre de frittage (2) et la coque d'article à fritter (6) et le recouvrement d'article à fritter (7), de préférence l'ensemble du dispositif de frittage (1), sont constitués du même métal ou du même alliage de métaux.

7. Dispositif de frittage (1) selon l'une quelconque des revendications 3 à 6, **caractérisé en ce que** l'alliage de métaux contient au moins, en tant que composant de l'alliage, du fer, du chrome et/ou de l'aluminium.

8. Dispositif de frittage (1) selon l'une quelconque des revendications 1 à 3, **caractérisé en ce que** le recouvrement d'article à fritter (7) présente un matériau en céramique, de préférence de l'oxyde d'aluminium ou de l'oxyde de zirconium ou du carbure de silicium ou du verre de quartz ou en est constitué.

9. Dispositif de frittage (1) selon l'une quelconque des revendications 1 à 8, **caractérisé en ce que** dans une position de fonctionnement, dans laquelle la coque d'article à fritter (6) est disposée dans la cavité de chambre de frittage (5) de la chambre de frittage (2), au moins par endroits une fente (13) de préférence de forme annulaire avec une largeur de fente (14) inférieure ou égale à 1 mm est disposée entre la coque d'article à fritter (6) et la chambre de frittage (2).

10. Procédé servant à fritter des pièces, en particulier dentaires, sous une atmosphère protectrice, avec un dispositif de frittage (1) selon l'une quelconque des revendications 1 à 9, dans lequel la pièce à fritter est disposée, au cours de l'opération de frittage, dans la coque d'article à fritter (6) du dispositif de frittage (1) et la coque d'article à fritter (6) est disposée dans la cavité de chambre de frittage (5) de la chambre de frittage (1), et la pièce à fritter est recouverte au moyen du recouvrement d'article à fritter (7).
